# EUROPÄISCHE PATENTSCHRIFT

(11) **EP 0 689 865 B1**
(45) Veröffentlichungstag und Bekanntmachung des Hinweises auf die Patenterteilung: **30.09.1998**
(21) Anmeldenummer: 95810385.5
(22) Anmeldetag: 09.06.1995
(51) Int. Cl.: B01F 15/00, B29B 7/40

(54) **Dynamischer Mischkopf**
Dynamic mixing head
Tête de mélange dynamique

(30) Priorität: 28.06.1994 CH 2056/94
(43) Veröffentlichungstag der Anmeldung: 03.01.1996
(73) Patentinhaber: MTA Automation AG, CH-2555 Brügg (CH)
(72) Erfinder: Moser, Peter, CH-2563 Ipsach (CH); Thomann, Bruno, CH-2555 Brügg (CH); Knuchel, Claude-Alain, CH-2603 Péry (CH)
(74) Vertreter: AMMANN PATENTANWAELTE AG BERN

(56) Entgegenhaltungen:
- DE-A- 2 056 435
- DE-A- 4 128 549
- DE-U- 8 717 424
- FR-A- 1 295 787
- GB-A- 1 152 418
- US-A- 3 343 817
- US-A- 3 902 850
- US-A- 3 924 837

## Beschreibung

Die vorliegende Erfindung bezieht sich auf einen Mischkopf gemäss Oberbegriff des unabhängigen Anspruchs 1.

Klebstoffe, Vergussmassen usw. bestehen oft aus 2 oder mehr Komponenten, die unmittelbar vor der Applizierung auf dem Substrat miteinander innig vermischt werden müssen, um z. B. ein vorzeitiges Aushärten zu vermeiden. Vorteilhaft geschieht dies in einem kontinuierlischen Prozess in einer Mischkammer mit einem dynamischen Rührorgan, d. h. einem Rührer. Bei Unterbrechungen reagieren meistens die Reste in der Mischkammer und machen diese zunächst unbrauchbar. Für die Wiederinbetriebnahme ist es dann nötig, entweder die Mischkammer von den Resten zu befreien oder den gesamten Mischkopf auszuwechseln und im Extremfall zu entsorgen.

Ein weiteres, allgemeines Problem besteht in der Abdichtung der beweglichen Teile des Rührers während des Betriebs, die gewährleisten muss, dass kein Material die Dichtungen umgeht. Gelangt Material zwischen z. B. den Antrieb des Rührers und das umgebende Gehäuse und härtet dort aus, wird der Mischkopf in der Regel unbrauchbar. Gute Dichtungen erzeugen in der Regel auch mehr Reibungswärme, was wiederum zu Zersetzung oder beschleunigter Reaktion des Mischgutes führen kann.

Aus den Schriften US-3,924,837 und FR-A-1 295 787 sind dynamische Mischer mit relativ grossen Kammervolumen, um reaktive Polymermischungen für das Giessen von Kunststoffobjekten in Formen zu erzeugen, bekannt. Die Mischer weisen daher beträchtliche Volumen auf, ihre Kammern sind solide und aufwendig gebaut, z. B. zusammengeschraubt bzw. zusammengeflanscht, und das Rührorgan ist kompliziert und damit teuer.

Insbesondere wegen der komplizierten Rührorgane ist eine Verkleinerung dieser Mischer auf kleine Mischvolumen praktisch ausgeschlossen.

Bei bekannten Ausführungen kleinvolumiger Mischköpfe bis 10 ml Kammerinhalt besteht weiterhin der Nachteil, dass eine relativ lange Verweilzeit des Mischguts in der Mischkammer nötig ist, um eine geforderte Durchmischung zu erreichen, was unter anderem von der unzureichenden Durchdringung der Mischkammer durch das Rührorgan herrührt.

Eine Aufgabe der vorliegenden Erfindung besteht darin, eine preiswerte Ausführung anzugeben, um, statt den Mischkopf relativ aufwendig zu zerlegen und zu reinigen, ihn im Falle zu starker Funktionsbeeinträchtigung einfach entsorgen zu können, und eine einfache, schnelle Auswechselbarkeit des Mischkopfs zu gewährleisen.

Weitere, bevorzugte Aufgaben sind eine Verbesserung der Abdichtung der beweglichen Teile und ein Mischkopf mit verbesserter Mischeffizienz.

Ein Mischkopf, der diese Aufgabe löst, ist im Anspruch 1 angegeben. Die weiteren Ansprüche geben bevorzugte Ausführungsformen der Erfindung an.

Demgemäss besteht der Mischkopf aus einem Hohlkörper mit einem Auslass und einer im wesentlichen gegenüber angeordneten Einschuböffnung. In die Einschuböffnung ist der Mischeinsatz eingesetzt und verschliesst diese, wodurch eine Mischkammer mit Auslass gebildet wird. Durch den Körper des Mischeinsatzes hindurch verlaufen die Antriebswelle des dynamischen Rührorgans und die Zufuhrleitungen für die zu vermischenden Komponenten oder das vorgemischte Mischgut. Insbesondere ist der Mischeinsatz dabei einfach in den Hohlkörper eingesteckt und wird in diesem auch unter Betriebsbedingungen im wesentlichen durch die Reibung zwischen der Wand des Hohlkörpers und dem Mischeinsatz gehalten. Der Mischeinsatz kann auch wieder einfach aus dem Hohlkörper herausgezogen werden, wodurch z. B. das Zerlegen zur Reinigung und Entsorgung stark vereinfacht wird.

Bevorzugt ist eine Anordnung, in der sich der Auslass möglichst nahe vor dem Rührorgan befindet und der Mischeinsatz möglichst nahe hinter dem Rührorgan die Kammer abschliesst. Je nach Rührorgan erhält man so eine kleine und, bei entsprechend flacher Ausführung des Rührorgans, relativ zum Querschnitt kurze Mischkammer. Das Rührorgan durchsetzt dabei während seine Bewegung nahezu den ganzen Querschnitt der Mischkammer. Die Komponenten strömen darin von hinten, vom Mischeinsatz her, an das Rührorgan, werden von diesem vermischt und die Mischung wird unter dem Druck nachströmenden Materials zum Auslass befördert. Dabei kann das Mischgut die Wirkungszone des Rührorgans praktisch nicht umströmen und damit der Durchmischung entgehen.

In einer bevorzugten Ausführung beträgt der Quotient Volumen zu Querschnitt der Mischkammer am Ort des Rührorgans zwischen dem Doppelten und einem Zehntel des Durchmessers des Hohlkörpers am Ort des Rührorgans. Weiter bevorzugt ist dieser Quotient kleiner als die Hälfte, bevorzugt kleiner als ein Drittel besagten Durchmessers.

Es ist auch möglich, statt einer mechanischen Kupplung des Rührorgans mit einem Antrieb eine Magnetkupplung vorzusehen, bzw. das Rührorgan, das einen Permanentmagneten oder ein durch Induktion magnetisierbares Element aufweist, durch ein zeitveränderliches Magnetfeld anzutreiben.

Die Erfindung soll weiter an einer bevorzugten Ausführung unter Bezugnahme auf Figuren erläutert werden.
- Fig. 1: zeigt einen Längsschnitt durch einen erfindungsgemässen Mischkopf mit Seitenansicht des Rührorgans,
- Fig. 2: eine Aufsicht auf einen Mischflügel zum Einsatz im Mischkopf, und
- Fig. 3: einen Schnitt analog Fig. 1 für eine Variante mit Magnetantrieb.

Der Mischkopf 1 besteht im wesentlichen aus dem Körper 3 und dem Mischeinsatz 5. Der Körper 3 kann im einfachsten Fall ein üblicher und preiswert verfügbarer Spritzenkörper sein, der auf die gewünschte Länge gekürzt ist. Das Material wird abhängig vom zu mischenden Material gewählt, in der Regel ist jedoch das Kunststoffmaterial, das für Spritzenkörper verwendet wird, z. B. Polyethylen, geeignet.

Ein weiterer Vorteil bei der Verwendung von Spritzenkörpern besteht im standardmässig vorhandenen Adapter 7 am Auslass 9, der hier mit einem Gewinde 11 ausgestattet ist. Damit kann ohne weiteres ein Vorsatz, wie z. B. eine Düse, an den Mischkopf angeschlossen werden.

Der Körper des Mischeinsatzes 5 besteht bevorzugt aus einem Kunststoff. Er weist eine zentrale Bohrung 13 für den Durchtritt der Welle 15 des Rührflügels 17 auf. Die Welle 15 ist am Ein- und Austritt in bzw. aus der Bohrung 13 in je einer Büchse 19, 21 gelagert. Die untere Büchse 21 übernimmt auch die Abdichtung der Welle 15.

Unten an der Welle 15 ist der Rührflügel 17 angesetzt, z. B. angelötet, aufgepresst oder auf eine andere gängige Art befestigt. Der Rührflügel 17 ist hier propellerförmig mit vier schrägstehenden Blättern 23. Diese Form füllt die zylindrische Mischkammer 25 sehr gut aus, schliesst knapp mit der unteren Endfläche 27 des Einsatzes 5 ab und erlaubt, je nach Drehsinn des Rührflügels 17 entweder den Vortrieb des Mischguts zu fördern oder zu hemmen.

Am oberen Wellenende 29 kann der nicht dargestellte Motor angeschlossen werden. Die Kupplung des Motors an die Welle 15 erfolgt vorzugsweise über eine leicht lösbare Kupplung, z. B. eine Klemmuffe oder eine Zahnkupplung.

Zur Längsfixierung der Welle 15 in der Bohrung 13 dient der Klemmring 31 in Verbindung mit einem Anschlag am Rührflügel 17, der an der unteren Endfläche 27 des Körpers des Einsatzes 5 gleitend anliegt.

Seitlich von der zentralen Bohrung 13 befinden sich weitere Bohrungen 33, in die die Versorgungsleitungen 35 eingeführt sind. In der bevorzugten Ausführung bestehen die Versorgungsleitungen 35 aus relativ steifem Kunstoffmaterial und haben den gleichen oder einen geringfügig grösseren Aussendurchmesser als der Durchmesser der Bohrungen 33 beträgt. Dadurch können die Leitungen 35 einfach in die Bohrungen hineingesteckt werden und klemmen dann für den Betrieb genügend fest, so dass weitere Sicherungsmassnahmen und Dichtungen für die Leitungen 35 entfallen können. Vorteilhaft ist auch, dass keine Verengung der Leitungen bzw. der Zufuhröffnungen zur Mischkammer hin auftritt. Es kann daher mit geringerem Druck zur Zufuhr der Komponenten gearbeitet werden.

Durch die Versorgungsleitungen 35 und die Bohrungen 33 werden die Komponenten z. B. aus nicht dargestellten Vorratsbehältern mit Dosiervorrichtungen dem Mischkopf zugeführt.

Zur Inbetriebnahme wird der Mischkopf 1 aus einem Spritzenkörper 3 und dem Mischeinsatz 5 mit Rührorgan 15, 17 zusammengesetzt, in einer Halterung, z. B. einer Klammerhalterung, einer Bride oder einem Block mit einer an den Mischkopf angepassten Vertiefung, befestigt und der Rührantrieb, die Versorgungsschläuche 35 und gegebenenfalls eine Düse o. ä. am Auslass 9 bzw. Adapter 7 angesetzt. Nach Ablauf der Betriebszeit wird der Mischkopf 1 in im wesentlichen umgekehrter Reihenfolge wieder entfernt und zerlegt. Zur sofortigen Wiederinbetriebnahme kann ein anderer, gereinigter oder neuer Mischkopf eingesetzt werden, oder der benutzte Mischkopf kann gereinigt und wiederverwendet werden. Falls eine Reinigung mit zu hohem Aufwand verbunden ist, kann der Mischkopf insgesamt entsorgt oder zerlegt und nur die nicht mehr verwendbaren Teile brauchen entsorgt zu werden.

Bezüglich Verschmutzung ist die relativ kleine abzudichtende Fläche zwischen Welle 15 und unterer Büchse 21 vorteilhaft, von der auch noch das Mischgut unter der Wirkung des Rührflügels weggedrängt wird. Bei den kleinen Volumen der Mischkammer, z. B. 0,2 - 3 ml, können auch bei hochviskosem Mischgut ohne Probleme Wellen (15) mit Durchmessern um 1 mm verwandt werden. Das Eindringen von Mischgut in die Bohrung 13 kann somit mit einfachen Mitteln wirksam verhindert werden. Wegen der kleinen Dichtfläche ist auch die Wärmeentwicklung gering und damit auch die thermische Belastung des Mischguts, das sich nahe der unteren Büchse 21 befindet. Gerade bei thermisch härtendem Mischgut wird dadurch das Risiko vermindert, eine Härtung am Wellendurchtritt aus der Büchse 21 oder auch darin zu haben, was zu einer Verschmutzung des Mischguts und einem Blockieren des Rührflügels 17 führen kann.

Ein weitere Vorteil der Erfindung ist darin zu sehen, dass fast die gesamte Mischkammer 25 vom Rührflügel erfasst wird. Zur besseren Raumerfüllung ist der Rührflügel 17 noch an die Verjüngung der Mischkammer 25 zum Auslass 9 hin angepasst, indem die Blätter 23 unten entsprechende Abschrägungen 37 aufweisen. Dies und die Tatsache, dass das Mischgut die vom Rührflügel erfasste Zone der Mischkammer zwangsweise passieren muss, sichert eine hervorragende Durchmischung bei kurzer Verweilzeit. Damit kann die Mischkammer auch relativ zu ihrem Durchmesser sehr kurz gehalten werden, insbesondere kürzer als der Durchmesser.

Als Material für Einsatz 5, Körper 3 und Rührflügel 17 sind Kunststoffe einsetzbar, die bevorzugt inert gegenüber dem Mischgut sind. Nicht ausgeschlossen sind jedoch andere Materialien wie z. B. Metalle, insbesondere für den Rührflügel bei hochviskosem Mischgut, oder Glas. Für die Welle 15 ist Metall bevorzugt, denkbar sind jedoch auch die anderen erwähnten Materialien.

Die Büchsen 19 und 21 und der Klemmring 31 können aus für derartige Teile gängigem Material bestehen. Bei der unteren Büchse ist wieder auf Inertheit gegenüber dem Mischgut zu achten. Für die Büchsen 19, 21 kann z. B. Teflon (PTFE) eingesetzt werden. Es ist auch denkbar, die Welle direkt durch eine Passung an den beiden Enden der Bohrung 13 zu führen, insbesondere, wenn der Körper des Einsatzes 5 ganz aus Teflon besteht, was eine oder beide Büchsen 19, 21 entbehrlich macht.

In eine Variante der Erfindung wird das Rührorgan mit einem Magnet versehen und in der Mischkammer ein veränderliches Magnetfeld, insbesondere ein rotierendes, erzeugt. Der Rührflügel 17 kann dann berührungslos angetrieben werden und auf die Welle 15 kann verzichtet werden, wonach auch die Probleme mit der Abdichtung der Welle 15 entfallen, und der Mischeinsatz 5 kann zum Reinigen auch wesentlich einfacher zerlegt werden, da der Rührflügel 17 nur lose in der Mischkammer liegt.

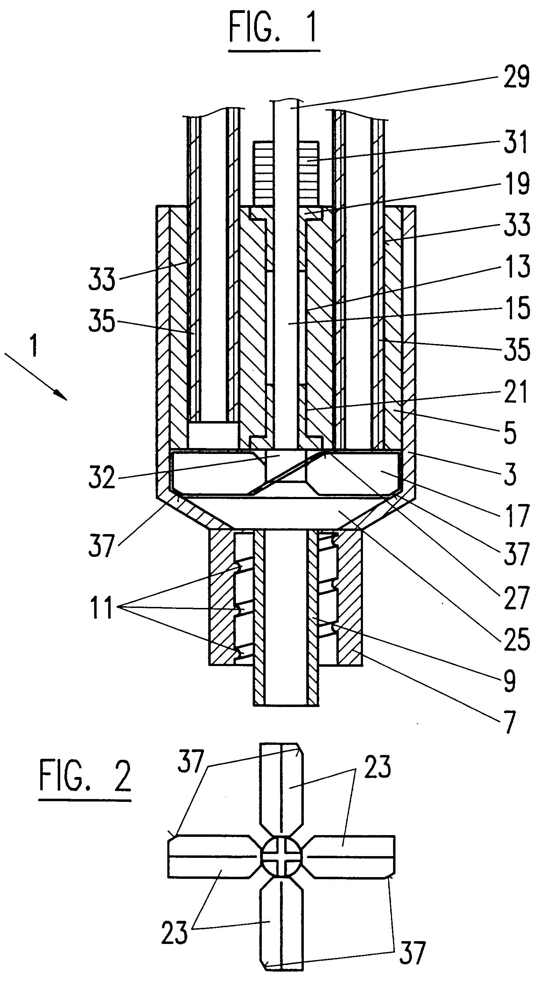

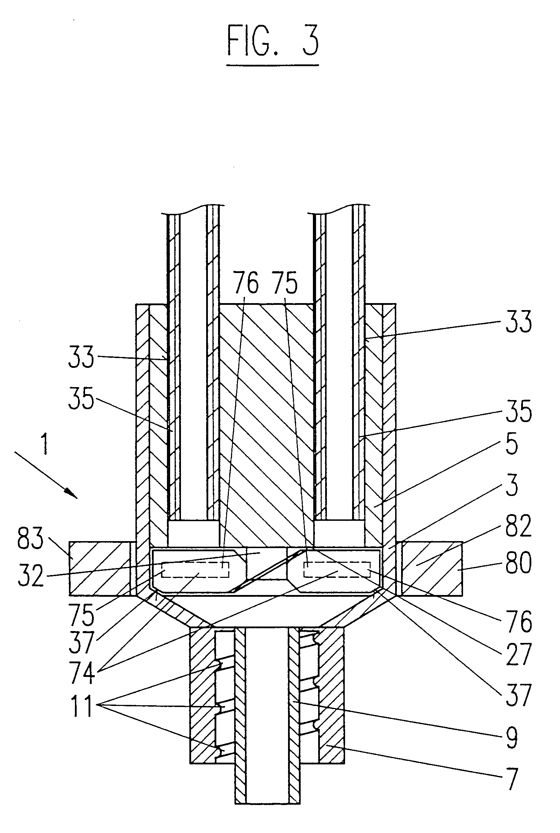

Fig. 3 zeigt diese Ausführung in der gleichen Darstellung wie Fig. 1. Analoge Teile sind mit den gleichen Bezugszeichen wie in Fig. 1 bezeichnet und werden hier nicht weiter beschrieben. Der Einsatz 55 entspricht Einsatz 5 der Fig. 1, weist keine Wellenbohrung 13 mehr auf.

Der Rührflügel 17 liegt lose in der Mischkammer 25. Zwei der Blätter 23 tragen jeweils einen Stabmagneten 74. Die Magnete 74 sind so angeordnet, dass bei dem einen der Nordpol 75 und bei dem anderen der Südpol 76 nach aussen zeigt. Bevorzugt sind sie in die Blätter des Rührflügels eingebettet, so dass sie gegen das Mischgut abgeschirmt sind.

Aussen um die Mischkammer herum ist der Magnetantrieb angeordnet, der hier aus einem ringförmigem Dauermagneten 80 besteht, auf dem der Nordpol diametral gegenüber dem Südpol angeordnet ist. Wird der Dauermagnet 80 in eine Drehbewegung um die Mischkammer versetzt, so folgt der Rührflügel 17 der Drehbewegung.

Anstatt des umlaufenden Ringmagneten sind auch Kombinationen von synchron rotierenden Stabmagneten denkbar, oder Elektromagnete, deren Magnetfeld so gesteuert wird, dass sich ein Drehfeld ausbildet. Derartige Anordnungen sind z. B. für Permanentmagnetemotoren bekannt.

Der Rührflügel kann auch mehr als zwei Magnete tragen, z. B. bei dem im Beispiel dargestellten vier, also auf jedem Blatt 23 einer. Die Magnete werden bevorzugt symmetrisch angeordnet, um bei höheren Drehzahlen eine Unwucht des Rührflügels und damit erhöhte Reibungsverluste zu vermeiden. Schliesslich kann auch der Rührflügel an sich aus einem permanentmagnetischen Material hergestellt sein, das bevorzugt mit einem Schutzmantel, z. B. aus Teflon oder Glas überzogen ist.

Denkbar ist auch, den Magneten im Rührflügel erst durch das umlaufende Magnetfeld durch Induktion zu erzeugen, z. B. in der Art eines Rotors mit Kurzschlusswicklung.

Anstelle der dargestellten Form des Rührflügels 17 ist eine weite Bandbreite möglicher Formen denkbar. Der Rührer kann also je nach Anforderungen an den Mischvorgang gewählt werden, z. B. mit senkrecht gestellte Blättern oder stabförmig. Er kann auch weniger oder mehr als 4 Blätter aufweisen.

Denkbar ist auch die Zufuhr nur einer Komponente, z. B. einer groben Vormischung, die erst durch die Behandlung im Mischkopf die für die Anwendung geforderten Eigenschaften erhält, z. B. bessere Durchmischung, andere Fliesseigenschaften (Thixotropie). In diesem Fall kann der Mischeinsatz 5, 55 nur eine Bohrung 33 für eine Zufuhrleitung 35 aufweisen.

Bevorzugtes Anwendungsgebiete sind die Herstellung von Klebstoffmischungen und Vergussmassen, insbesondere in Fällen, wo kleine Portionen abgegeben werden müssen. Da die Mischkammer für sehr kleine Volumen von höchstens 10 ml vorgesehen ist, sind immer nur kleinste Mengen als fertige, aushärtbare Mischung in der Anlage vorhanden. In einer bevorzugten Anwendung hat die Mischkammer ein Volumen zwischen etwa 0,1 und 5 ml. Im Fall einer Betriebsunterbrechung müssen dann nur diese kleinen Mengen entsorgt werden.

Eine bevorzugte Drehzahlobergrenze ist 1000 Upm (Umdrehungen pro Minute). Drehzahlen bis 10'000 Upm sind jedoch ohne Probleme realisierbar.

## Patentansprüche

1. Dynamischer Mischkopf (1) für kontinuierliche Betriebsweise mit einem in einer Mischkammer (25) von höchstens 10 ml Rauminhalt befindlichen, dynamischen Rührorgan (17), wobei ein Teil der Wandung der Mischkammer (25) aus einem Hohlkörper (3) mit einer ersten Öffnung und einer zweiten, kleineren Öffnung (9) gebildet wird, dadurch gekennzeichnet, dass in die erste Öffnung ein Einsatz (5), (55) eingesteckt ist, um diese gegenüber der Mischkammer (25) dicht zu verschliessen, und dass der Einsatz (5), (55) mindestens eine Zufuhrbohrung (33) für das Mischgut aufweist.

2. Mischkopf gemäss Anspruch 1, dadurch gekennzeichnet, dass der Hohlkörper (3) im wesentlichen zylindrisch ist, sich die Öffnungen an entgegengesetzten Enden des Zylinders befinden, die erste Öffnung im wesentlichen einen quer zum Hohlkörper (3) verlaufenden Schnitt darstellt, und das Rührorgan (17) derart gestaltet ist, dass es bei seiner Bewegung im wesentlichen den ganzen freien Querschnitt der Mischkammer in einer geschlossenen, zwischen Einsatz (5), (55) und zweiter Öffnung (9) liegenden Ebene durchdringt.

3. Mischkopf gemäss einem der Ansprüche 1 oder 2, dadurch gekennzeichnet, dass der Einsatz (5), (55) einen zylindrischen Körper aufweist, dessen Durchmesser gleich oder geringfügig grösser als derjenige des Innenraumes des Hohlkörpers (3) ist, so dass die zwischen Körper des Einsatzes (5), (55) und Innenwand des Hohlkörpers (3) wirkende Haftreibung den überwiegenden Teil der Kraft bildet, die zur Haltung des Einsatzes (5), (55) im Hohlkörper (3) unter Betriebsbedingungen nötig ist.

4. Mischkopf gemäss einem der Ansprüche 1 bis 3, dadurch gekennzeichnet, dass der Quotient Volumen zu Querschnitt der Mischkammer (25) am Ort des Rührorgans (17) zwischen dem Doppelten und einem Zehntel des Durchmessers des Hohlkörpers (3) am Ort des Rührorgans (17) beträgt.

5. Mischkopf gemäss Anspruch 4, dadurch gekennzeichnet, dass besagter Quotient kleiner als die Hälfte, bevorzugt kleiner als ein Drittel besagten Durchmessers ist.

6. Mischkopf gemäss einem der Ansprüche 1 bis 5, dadurch gekennzeichnet, dass mindestens zwei Zufuhrbohrungen (33) vorhanden sind.

7. Mischkopf gemäss Anspruch 4, dadurch gekennzeichnet, dass das Rührorgan (17) im wesentlichen als Propeller mit mindestens zwei Blättern (23), bevorzugt vier Blättern ausgebildet ist.

8. Mischkopf gemäss einem der Ansprüche 1 bis 7, dadurch gekennzeichnet, dass eine drehbare Welle (15) den Körper des Einsatzes (5) durchdringt, zumindest am mischkammerseitigen Ende (27) des Einsatzes (5), (55) gegenüber dem Mischgut dicht geführt ist, und an dieser Welle (15) das Rührorgan (17) angebracht ist.

9. Mischkopf gemäss einem der Ansprüche 1 bis 7, dadurch gekennzeichnet, dass Mittel vorhanden sind, um ein zeitveränderliches Magnetfeld in der Mischkammer zu erzeugen, und das Rührorgan (17) Permanentmagnete (74) oder unter der Wirkung des Magnetfeldes erregbare Magnete aufweist, damit das Rührorgan (17) durch das Magnetfeld antreibbar ist.

10. Mischkopf gemäss einem der Ansprüche 1 bis 9, dadurch gekennzeichnet, dass der Hohlkörper (3) im wesentlichen vom Körper einer Spritze gebildet wird.

11. Mischkopf gemäss einem der Ansprüche 1 bis 10, dadurch gekennzeichnet, dass Zufuhrleitungen in die Zufuhrbohrungen (33) einführbar sind, wobei ein dichter, lösbarer Abschluss zwischen Einsatz (5), (55) und Zufuhrleitungen erhalten wird, und dass die Zufuhrbohrungen (3) genügend lang sind, dass zwischen diesen und den darin eingeführten Zufuhrleitungen eine Haftreibung auftritt, die für die Haltung der Zufuhrleitungen ausreicht.

12. Mischkopf gemäss einem der Ansprüche 1 bis 9, dadurch gekennzeichnet, dass zumindest alle diejenigen Teile des Mischkopfs (1), die nicht beweglich sind, aus einem Kunststoff bestehen.

## Claims

1. Dynamic mixing head (1) for continuous operation, comprising a dynamic stirring member (17) disposed in a mixing chamber whose volume amounts to 10 ml at the most, a part of the wall of the mixing chamber (25) being formed of a hollow body (3) having a first opening and a second, smaller opening (9), characterised in that an insert (5, 55) is inserted in the first opening in order to close it off tightly from the mixing chamber (25), and in that the insert (5, 55) comprises at least one inlet bore (33) for the composition to be mixed.

2. Mixing head according to claim 1, characterised in that the hollow body (3) is essentially cylindrical, in that the openings are provided at opposite ends of the cylinder, in that the first opening essentially represents a cut transversally to the hollow body (3), and in that the stirring member (17) is so designed that its motion essentially covers the entire free cross-sectional area of the mixing chamber in a closed plane extending between the insert (5, 55) and the second opening (9).

3. Mixing head according to any one of claims 1 or 2, characterised in that the insert (5, 55) comprises a cylindrical body whose diameter is equal to or slightly greater than that of the interior of the hollow body (3), so that the static friction existing between the body of the insert (5, 55) and the inner wall of the hollow body (3) constitutes the preponderant part of the force which is required to maintain the insert (5, 55) in the hollow body (3) in operation.

4. Mixing head according to any one of claims 1 to 3, characterised in that the ratio of volume to cross-section of the mixing chamber (25) at the location of the stirring member (17) is comprised between the double and a tenth of the diameter of the hollow body (3) at the location of the stirring member (17).

5. Mixing head according to claim 4, characterised in that said ratio is smaller than half and preferably smaller than a third of said diameter.

6. Mixing head according to any one of claims 1 to 5, characterised in that at least two supply bores (33) are provided.

7. Mixing head according to claim 4, characterised in that the stirring member (17) is essentially in the form of a propeller having at least two blades (23) and preferably four blades.

8. Mixing head according to any one of claims 1 to 7, characterised in that a rotatable shaft (15) traverses the body of the insert (5), is guided and sealed from the mixed composition at the mixing chamber end (27) of the insert (5, 55) at least, and in that the stirring member (17) is attached to this shaft (15).

9. Mixing head according to any one of claims 1 to 7, characterised in that means are provided in order to produce a temporally variable magnetic field in the mixing chamber, and in that the stirring member (17) comprises permanent magnets (74) or magnets which are capable of being excited under the action of the magnetic field, thus allowing to drive the stirring member (17) by means of the magnetic field.

10. Mixing head according to any one of claims 1 to 9, characterized in that the hollow body (3) is essentially formed by the body of a syringe.

11. Mixing head according to any one of claims 1 to 10, characterized in that supply ducts are insertable in the supply bores (33) while a tight, detachable closure between the insert (5, 55) and the supply ducts is obtained, and in that the supply bores (3) are long enough to produce a static friction between them and the supply ducts inserted therein which is sufficient to hold the supply ducts.

12. Mixing head according to any one of claims 1 to 9, characterized in that at least all those parts of the mixing head (1) which are not movable are made of a plastics material.

## Revendications

1. Tête de mélange dynamique (1) pour fonctionnement continu, comprenant un organe de mélange (17) disposé dans une chambre de mélange (25) d'un volume de 10 ml au plus, une partie de la paroi de la chambre de mélange (25) étant formée d'un corps creux (3) ayant une première ouverture et une deuxième ouverture (9) plus petite, caractérisée en ce qu'une insertion (5, 55) est enfichée dans ladite première ouverture afin de fermer de manière étanche cette dernière par rapport à la chambre de mélange (25), et en ce que l'insertion (5, 55) présente au moins un alésage (33) pour l'alimentation de la composition à mélanger.

2. Tête de mélange selon la revendication 1, caractérisée en ce que le corps creux (3) est essentiellement cylindrique, que les ouvertures se trouvent aux extrémités opposées dudit cylindre, que la première ouverture est essentiellement une coupe transversale du corps creux (3), et que l'organe de mélange (17) présente une telle forme que son mouvement couvre essentiellement l'ensemble de la section transversale libre de la chambre de mélange dans un plan fermé compris entre l'insertion (5, 55) et la deuxième ouverture (9).

3. Tête de mélange selon l'une des revendications 1 ou 2, caracterisée en ce que l'insertion (5, 55) présente un corps cylindrique dont le diamètre est égal à ou légèrement plus grand que celui de l'intérieur du corps creux (3), de sorte que l'adhérence entre le corps de l'insertion (5, 55) et la paroi intérieure du corps creux (3) constitue la majeure partie de la force qui est nécessaire pour retenir l'insertion (5, 55) dans le corps creux (3) sous conditions de service.

4. Tête de mélange selon l'une quelconque des revendications 1 à 3, caractérisée en ce que le rapport du volume à la section transversale de la chambre de mélange (25) à l'endroit de l'organe de mélange (17) est compris entre le double et un dixième du diamètre du corps creux (3) à l'endroit de l'organe de mélange (17).

5. Tête de mélange selon la revendication 4, caractérisée en ce que ledit rapport est inférieur à la moitié et préférablement inférieur au tiers dudit diamètre.

6. Tête de mélange selon l'une quelconque des revendications 1 à 5, caractérisée en ce qu'elle présente au moins deux alésages d'alimentation (33).

7. Tête de mélange selon la revendication 4, caractérisée en ce que l'organe de mélange (17) présente essentiellement la forme d'une hélice ayant au moins deux pales (23) et préférablement quatre pales.

8. Tête de mélange selon l'une quelconque des revendications 1 à 7, caractérisée en ce qu'un arbre rotatif (15) traverse le corps de l'insertion (5), qu'il est guidé de manière étanche envers la composition mélangée au moins à l'extrémité côté chambre de mélange (27) de l'insertion (5, 55), et que l'organe de mélange (17) est fixé à cet arbre (15).

9. Tête de mélange selon l'une quelconque des revendications 1 à 7, caractérisée en ce qu'elle comporte des moyens permettant de produire dans la chambre de mélange un champ magnétique variable dans le temps, et que l'organe de mélange (17) comporte des aimants permanents (74) ou des aimants pouvant être excités sous l'action dudit champ magnétique afin de permettre l'entraînement de l'organe de mélange (17) par le champ magnétique.

10. Tête de mélange selon l'une quelconque des revendications 1 à 9, caractérisée en ce que le corps creux (3) est essentiellement formé par le corps d'une seringue.

11. Tête de mélange selon l'une quelconque des revendications 1 à 10, caractérisée en ce que les alésages d'alimentation (33) permettent l'introduction de conduites d'alimentation alors qu'une fermeture étanche et amovible est obtenue entre l'insertion (5, 55) et les conduites d'alimentation, et que les alésages d'alimentation (3) sont assez longues pour que l'adhésion produite entre ces dernières et les conduites d'alimentation y introduites est suffisante pour retenir les conduites d'alimentation.

12. Tête de mélange selon l'une quelconque des revendications 1 à 9, caractérisée en ce qu'au moins toutes les parties immobiles de la tête de mélange (1) sont en matière synthétique.
